# EUROPÄISCHE PATENTSCHRIFT

(11) **EP 2 086 079 B1**
(45) Veröffentlichungstag und Bekanntmachung des Hinweises auf die Patenterteilung: **20.07.2016**
(21) Anmeldenummer: 09150498.5
(22) Anmeldetag: 14.01.2009
(51) Int. Cl.: H02G 3/12, H02G 3/14

(54) **Elektrische Installationsvorrichtung mit einer Platine**
Electric installation device with a board
Dispositif d'installation électrique doté d'une platine

(30) Priorität: 25.01.2008 DE 202008001092 U
(43) Veröffentlichungstag der Anmeldung: 05.08.2009
(73) Patentinhaber: GIRA Giersiepen GmbH & Co. KG, 42477 Radevormwald (DE)
(72) Erfinder: Siepen, Andreas, 51515, Kürten (DE)
(74) Vertreter: Patent- und Rechtsanwälte Dr. Solf & Zapf

(56) Entgegenhaltungen:
- EP-A- 1 804 346
- DE-A1- 4 102 128
- DE-U- 1 955 004
- DE-U1- 20 010 996

## Beschreibung

Die vorliegende Erfindung betrifft eine elektrische Installationsvorrichtung, mit einer Platine, die auf einem Tragrahmen befestigbar ist, welcher Klemmfedern zu seiner Verbindung mit einem Halteteil, wie einem Blendrahmen oder einem Sockelteil, aufweist, wobei die Klemmfedern einstückig mit dem Tragrahmen ausgeführt sind.

Derartige Installationsvorrichtungen sind beispielsweise aus der DE 200 10 996 U1 und aus der DE 93 05 822 U1 bekannt.

Die DE 200 10 996 U1 betrifft dabei eine elektrische Schaltvorrichtung mit einem Tastschalter und mit einem dem Tastschalter zugeordneten Kennzeichnungselement, wobei der Tastschalter eine in einer Rahmenkonstruktion federnd gelagerten Tast-Wippe umfasst, die auf mindestens einen Schaltkontakt einwirkt, welcher auf einer Schaltplatine angeordnet ist, wobei unterhalb von zwei gegenüberliegenden Wippenenden zwischen der Tast-Wippe und der Schaltplatine jeweils mindestens ein Druckfederelement angeordnet ist. Hierbei ist das Kennzeichnungselement auf der Schaltplatine angeordnet und wird von der Tast-Wippe brückenartig übergriffen, wobei die Tast-Wippe in der Rahmenkonstruktion frei gelagert und seitlich des Kennzeichnungselementes mit einem eine Schaltverkippung zulassenden seitlichem Spiel senkrecht zur Erstreckungsebene der Schaltplatine anschlagbegrenzt geführt ist. Dabei sind in der dargestellten Ausführung als Verbindungsmittel zur formschlüssigen oder form- und kraftschlüssigen Verbindung des Tragrahmens mit einem Blendrahmen an einem umlaufenden Randsteg des Tragrahmens angeordnete Klemmfedern vorgesehen.

Die DE 93 05 822 U1 beschreibt ein elektrisches Installationsgerät, insbesondere ebenfalls einen Taster, mit einem einen Tragring aufweisenden Sockel für einen Busankoppler und mit einer elektrische Einrichtungen aufnehmenden Platine, die ihrerseits von einem Träger aufgenommen ist, der unter Zwischenschaltung einer rahmenartigen Abdeckung einerseits mit dem Sockel bzw. mit dem Busankoppler verbunden ist und andererseits mehrere schwenkbare Betätigungselemente aufweist, die quer zur Längsmittellinie des Gerätes angeordnet sind. In einer speziellen Ausführung sind dabei dem Träger der Platine zwei Haltefedern zugeordnet, die Durchbrüche des Tragrings durchgreifen und mit ihren vorderen freien Enden an der Umfangsfläche des Sockels zur Anlage kommen. Das Befestigen der Haltefeder erfolgt dabei bekanntermaßen an der Unterseite des Bodens des Trägers, insbesondere durch ein Vernieten eines Federschenkels. Es ist auch bekannt, dort Vorsprünge anzuordnen, die Durchbrüche der Schenkel der Feder mit Klemmsitz durchgreifen.

Weiterhin sind gattungsgemäße Installationsvorrichtungen der eingangs genannten Art aus der DE 19 55 004 U sowie aus der DE 41 02 128 A1 bekannt.

Die elektrische Installationseinrichtung der DE 19 55 004 U besitzt einen Blendrahmen beiderseits mit je einem leicht nach außen geneigten elastisch federnden Befestigungslappen. Die Enden des Befestigungslappens laufen in zwei rechtwinklig abgebogene Krallen aus, die in sägezahnartig ausgebildeten Flächen an der Innenseite eines Mauerkastens verrasten.

Bei der aus der DE 41 02 128 A1 bekannten elektrischen Installationsvorrichtung ist ein Kabelkanal mit U-förmigem Querschnitt vorgesehen, der auch als Brüstungskanal bezeichnet wird. Dabei sind die Schenkel des U die Seitenwandungen. Diese werden durch einen horizontal verlaufenden Boden miteinander verbunden. Die oberen Enden der Seitenwandungen haben eine waagerechte Einziehung, die in einen in Richtung auf den Boden verlaufenden Innenteil übergeht, um danach wieder in Richtung Öffnung nach oben zu verlaufen. Auf diese Weise wird an den seitlichen Begrenzungswandungen der Öffnung des Kabelkanals jeweils eine Rast gebildet. Diese dient zum Zusammenwirken mit Gegenrasten, die Bestandteil eines Deckels sind. Beim bestimmungsgemäßen Gebrauch wird der Deckel so auf das Unterteil des Kabelkanals aufgesetzt, dass seine Gegenrasten mit den Rasten des Kabelkanals in Wirkverbindung treten. Auf diese Weise wird eine lösbare Verbindung zwischen dem Deckel und dem Kabelkanal hergestellt.

Der vorliegenden Erfindung liegt die Aufgabe zugrunde, eine elektrische Installationsvorrichtung der eingangs genannten Art derart auszugestalten, dass sie bei einfacher und funktionssicherer Montage und insbesondere der Möglichkeit eines sogenannten Tapetenausgleichs einen geringeren Herstellungsaufwand erfordert.

Erfindungsgemäß wird dies dadurch erreicht, dass die Klemmfedern jeweils an drei Klemmstellen zwischen einerseits dem Sockelteil und andererseits dem Blendrahmen verklemmbar sind, wobei sich die Klemmfedern jeweils an einer ersten Klemmstelle mit einem freien Ende eines einstückig an eine Bodenplatte des Tragrahmens angeformten Federschenkels an einer Umfangsfläche des Sockelteils abstützen und Durchbrüche eines umfangsgemäß radial abstehenden Tragrings des Sockelteils durchgreifen, wobei sich an einer zweiten Klemmstelle jeweils der Federschenkel der Klemmfedern an einer durchbrochenen Wand eines Durchbruchs abstützt, und wobei die Klemmfedern jeweils an einer dritten Klemmstelle mit dem Federschenkel oberhalb der zweiten Klemmstelle am Blendrahmen radial außen liegend zur Anlage kommen, so dass der Blendrahmen in axialer und lateraler Richtung am Tragrahmen fixiert ist, jedoch zusammen mit dem Tragrahmen axial verschieblich bleibt.Hierbei ist eine konstruktiv einfache und fertigungsfreundliche Ausführung der Federn vorgesehen, wobei diese zusammen mit dem Tragrahmen beispielsweise als Kunststoff-Formteil oder Spritzgussteil gefertigt werden können. Hierbei können als bevorzugte Werkstoffe beispielsweise Polycarbonate, z. B. Polyoxymethylen, Polymethacrylsäuremethylester oder verstärkte Kunststoffe, wie faserverstärktes Polyamid, zum Einsatz kommen. Der Arbeitsgang des Befestigens der Federn am Träger, wie das bekannte Vernieten oder dgl., kann vorteilhafterweise entfallen.

Mittels der Klemmfedern kann die elektrische Installationsvorrichtung durch ein Aufstecken sicher und schnell an einem zu verbindenden elektrischen Gerät befestigt werden.

Die Klemmfedern können zwei stumpfwinklig zueinander stehende Federschenkel aufweisen, wobei sie bei einer Verklemmung zwischen dem Sockelteil und dem Blendrahmen mit ihrem einen Federschenkel an einer Umfangsfläche des Sockelteils und mit ihrem anderen Federschenkel am Blendrahmen zur Anlage kommen.

Erfindungsgemäß ist dabei vorgesehen, dass die Klemmfedern bei der Verklemmung mit dem Sockelteil Durchbrüche eines umfangsgemäß radial abstehenden Tragrings des Sockelteils durchgreifen, wobei sich jeweils ein Federschenkel der Klemmfedern an der durchbrochenen Wand eines Durchbruchs abstützt. Auf diese Weise ist der Tragring am Sockelteil längs und quer zur Achse des Sockelteils fixiert, bleibt aber bei Aufwendung einer in axialer Richtung wirkenden Zugkraft - vorteilhafterweise zusammen mit dem Blendrahmen - noch axial verschieblich, so dass ohne Beeinträchtigung der Funktionssicherheit und Stabilität der Verbindung der Abstand zwischen dem Sockelteil und dem Blendrahmen veränderbar ist. Diese Möglichkeit der Veränderung des Abstands ist von Bedeutung für den Ausgleich von Höhentoleranzen einer Oberfläche, in die die erfindungsgemäße Installationsvorrichtung, insbesondere in Unterputzausführung, eingesetzt werden soll und vorzugsweise dann, wenn ein sogenannter Tapetenausgleich erfolgen soll, d. h. wenn sich zwischen dem Sockelteil und dem Blendrahmen eine mehr oder weniger dicke Tapetenschicht befindet.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im Folgenden die Erfindung näher erläutert werden. Dabei zeigen:
- Fig. 1: in perspektivischer Explosionsdarstellung, eine Ausführung einer erfindungsgemäßen elektrischen Installationsvorrichtung, einschließlich eines mit dieser Installationsvorrichtung verbindbaren elektrischen Gerätes,
- Fig. 2: in Vorderansicht, eine Ausführung eines Tragrahmens einer erfindungsgemäßen elektrischen Installationsvorrichtung mit einstückig angeformten Klemmfedern,
- Fig. 3: in perspektivischer Vorderansicht das in Fig. 2 dargestellte Bauteil,
- Fig. 4: nochmals das gleiche Bauteil wie in Fig. 2 und 3, jedoch in perspektivischer Unteransicht und eingesetzt in einen Blendrahmen,
- Fig. 5: vergrößert gegenüber den übrigen Darstellungen und in perspektivischer Seitenansicht, einen Ausschnitt aus der erfindungsgemäßen elektrischen Installationsvorrichtung in montiertem Zustand,
- Fig. 6: den montierten Zustand der erfindungsgemäßen elektrischen Installationsvorrichtung in der Vorderansicht, in einer Darstellung ähnlich wie in Fig. 2, jedoch geschnitten.

In den Figuren der Zeichnung sind gleiche bzw. einander entsprechende Teile stets mit denselben Bezugszeichen versehen, so dass sie in der Regel auch jeweils nur einmal beschrieben werden.

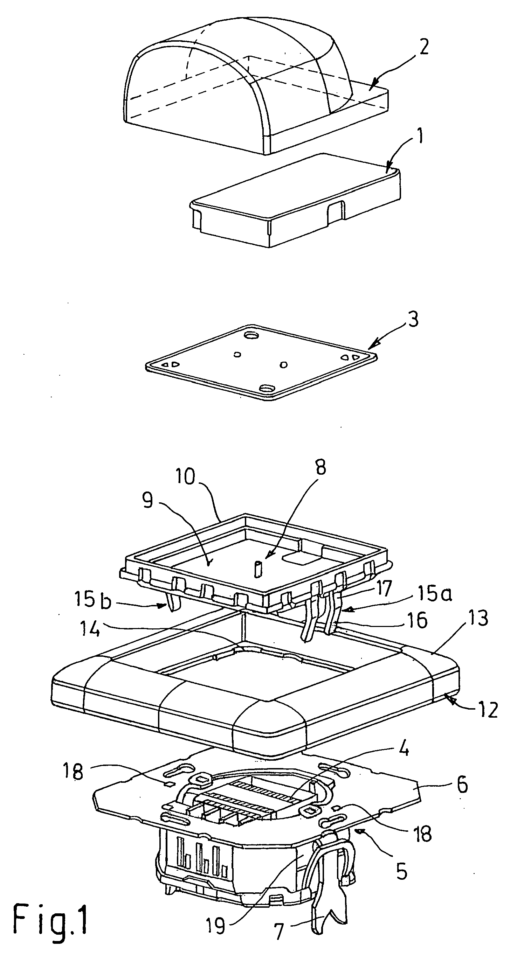

Wie sich zunächst aus Fig. 1 ergibt, weist eine Ausführung einer erfindungsgemäßen elektrischen Installationsvorrichtung einen Funktionsaufsatz 1 auf, bei dem es sich beispielsweise um eine Tast-Wippe oder einen sogenannten Touch-Aufsatz oder ein elektrisches Bauteil mit anderer Funktion handeln kann und der - wie dargestellt - unter einer Abdeckung 2 angeordnet sein kann.

Der Funktionsaufsatz 1 wirkt mit einer darunter angeordneten Platine 3 zusammen, auf der sich oberseitig elektrische Schaltkontakte, wie beispielsweise sogenannte Surface-Mounted-Device-Kontakte (SMD), befinden können. Die Platine 3 besitzt elektrische Leitungsverbindungen, von denen sich einige nach unten als Steckverbindungen zum elektrischen Anschluß an ein elektrisches, beispielsweise zu schaltendes, Gerät 4 erstrecken können. Das elektrische Gerät 4 befindet sich - wie Fig. 1 zeigt - in einem Sockelteil 5, welches - wie dargestellt - in an sich bekannter Weise einen Tragring 6 und Krallen 7 zur Befestigung in einer Dose aufweisen kann.

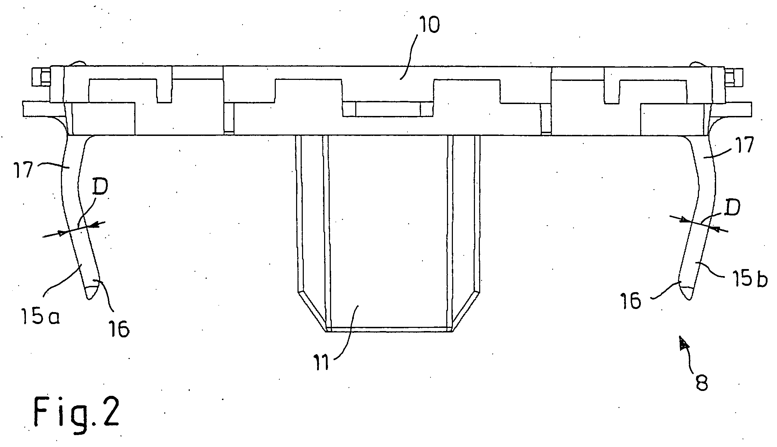

Die Platine 3 wird von einem unter ihr angeordneten Tragrahmen 8 aufgenommen. Dieser Tragrahmen 8 ist insbesondere rechteckig ausgebildet und besitzt eine Grundplatte 9, die einen umlaufenden Randsteg 10 aufweist. In den vom Randsteg 10 umschlossenen Bereich ist die Platine 3 einsetzbar. Zur Aufnahme ihrer Steckverbindungen für das elektrische Gerät 4 kann dabei von der Grundplatte 9 nach unten ragend ein domartiger Steckeransatz 11 vorgesehen sein, der die Steckverbindungen einhaust. Dieser Steckeransatz 11 ist insbesondere den Darstellungen in Fig. 2 bis 4 gut zu entnehmen.

Der Tragrahmen 8 ist in einen ihn umgreifenden Blendrahmen 12 einsetzbar. Dieser Blendrahmen 12 kann - wie der Tragrahmen 8 - auch insbesondere rechteckig ausgebildet sein und weist ebenfalls einen umlaufenden Rand 13 auf. Der Blendrahmen 12 kann auf das elektrische Gerät 4, bei dem es sich beispielsweise um ein Bus-Gerät handeln kann, gegebenenfalls unter Verrastung, aufgesetzt werden, während die montierten übrigen Elemente - Tragrahmen 8, Platine 3, Funktionsaufsatz 1, Abdeckung 2 - in den Blendrahmen 12 ein- bzw. auf den Blendrahmen 12 aufgesetzt werden. Dabei umfasst sie der umlaufende Rand 13 seitlich, und sie liegen unterseitig auf von dem Rand 13 nach innen ragenden Auflageansätzen 14 auf.

Zur form- und kraftschlüssigen Verbindung des Tragrahmens 8 mit dem Sockelteil 5, in dem sich das elektrische Gerät 4 befindet, sind auf einander gegenüberliegenden Seiten des Tragrahmens 8 Klemmfedern 15a, 15b vorgesehen. Diese Klemmfedern 15a, 15b sind erfindungsgemäß einstückig mit dem Tragrahmen 8 ausgeführt, wobei mindestens eine Feder 15a, 15b auf jeder Seite vorgesehen sein sollte. Im dargestellten Beispiel sind auf jeder Seite jeweils zwei Klemmfedern 15a, 15b vorgesehen, es könnten aber auch drei oder mehr sein.

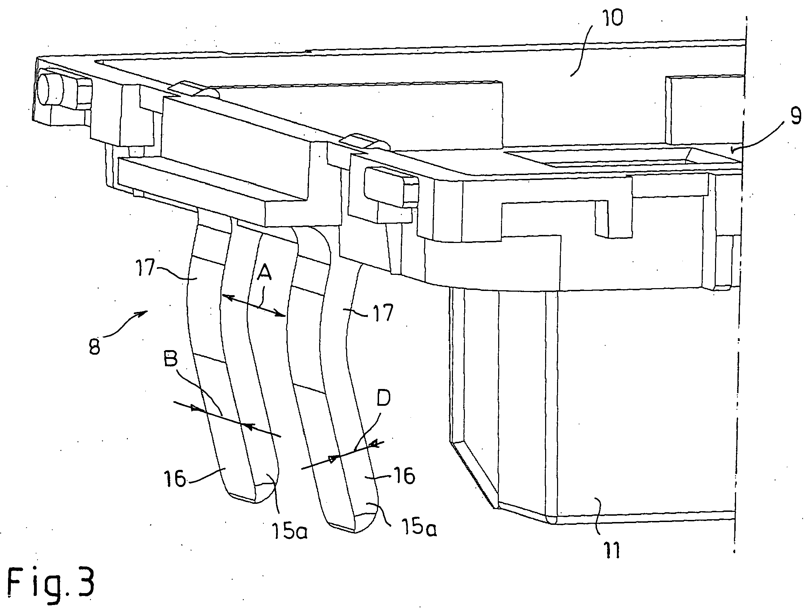

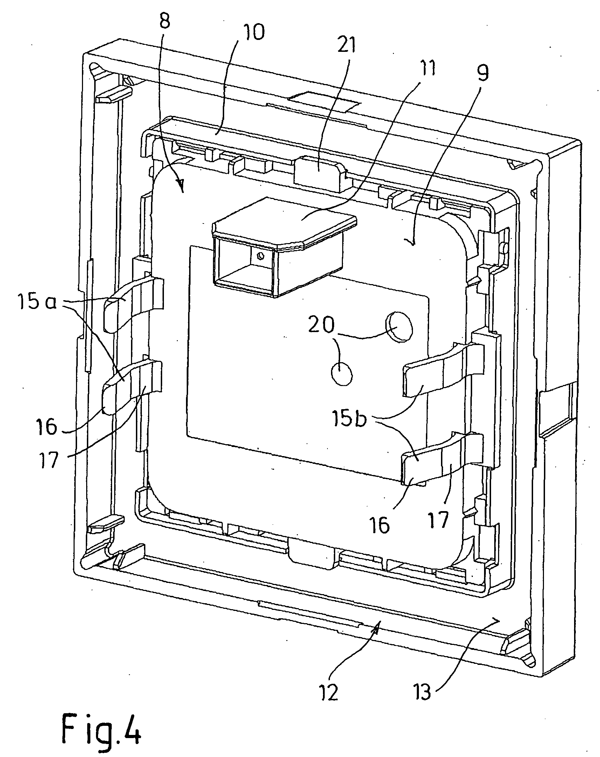

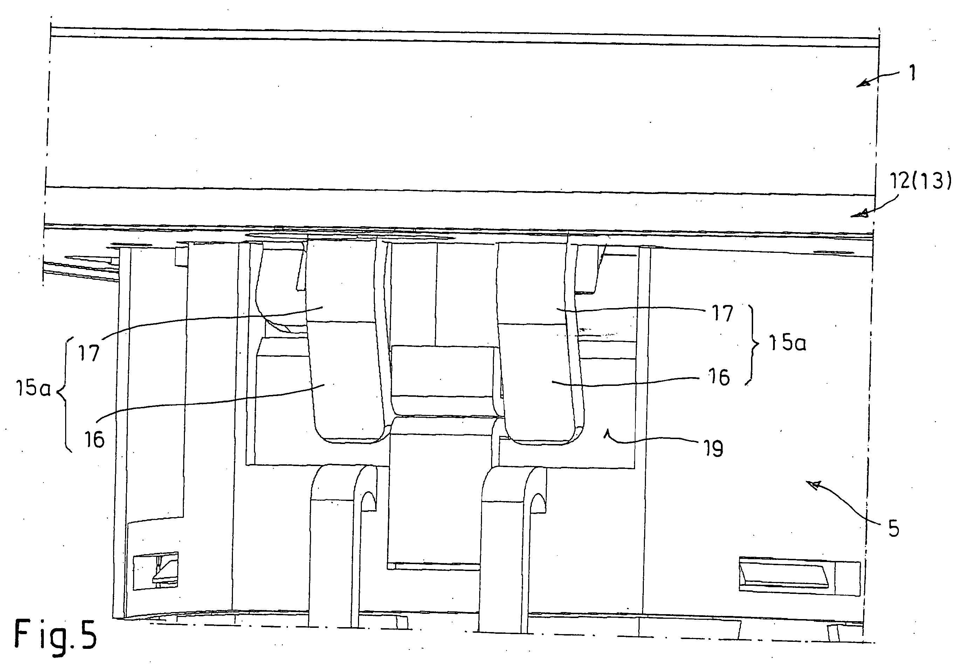

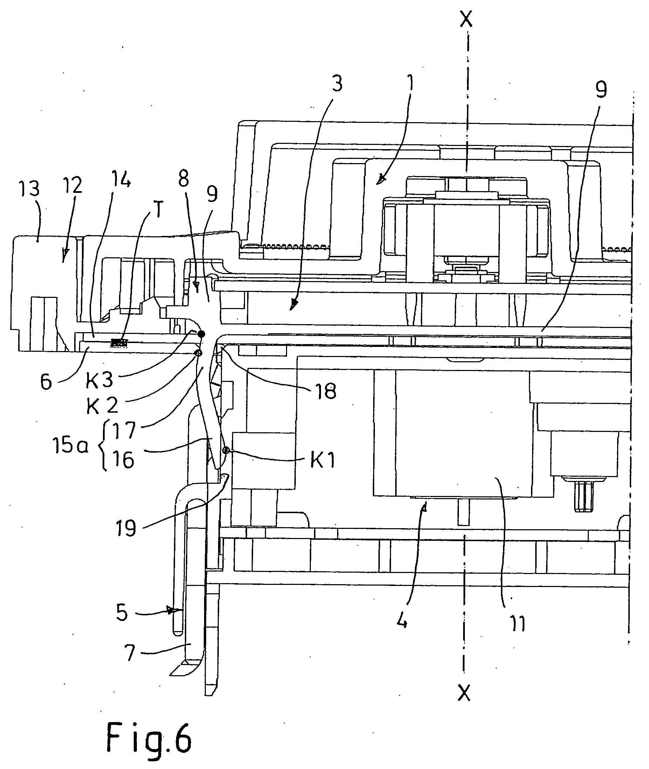

Gegenüber Fig. 1 vergrößerte Einzeldarstellungen des Tragrahmens 8 zeigen Fig. 2 und 3, während in Fig. 4 in einer Ansicht von unten der in den Blendrahmen 12 eingesetzte Tragrahmen 8 dargestellt ist und sich Fig. 5 und 6 auf das gesamte in Fig. 1 dargestellte Ensemble im Montagezustand beziehen. Hieraus werden weitere Details der erfindungsgemäßen Vorrichtung deutlich.

Zunächst ist zu sehen, dass die Klemmfedern 15a, 15b blattfederartig ausgeführt sind, wobei jeweils eine Dicke D der Feder werkstoffabhängig entsprechend der gewünschten Federcharakteristik und unter Berücksichtigung der geforderten Festigkeit dimensioniert ist. Die Klemmfedern 15a, 15b sind V-förmig ausgeführt, wobei die Spitze des V, welche - wie dargestellt - abgerundet sein kann, jeweils radial nach außen weist und die Klemmfedern 15a, 15b zwei stumpfwinklig zueinander stehende Federschenkel 16, 17 aufweisen.

Des Weiteren kann vorgesehen sein, dass die Klemmfedern 15a, 15b und das Sockelteil 5 eine Codierung für den lagerichtigen Aufsatz des Tragrahmens 8 auf das Sockelteil 5 aufweisen. Diese Codierung kann dabei beispielsweise durch eine Dicke D (Fig. 2, 3), Breite B (Fig. 3) und/oder jeweils einen Abstand A zwischen auf einer Seite liegenden Federn 15a/15a bzw. 15b/15b (Fig. 3) erreicht werden, wobei mindestens eine dieser geometrischen Abmessungen mit anderer Größe ausgeführt wird als bei den Federn 15b, 15a auf der jeweils anderen Seite des Tragrahmens 8. Eine entsprechend komplementäre Ausbildung muss dann das Sockelteil 5 aufweisen, insbesondere durch eine formangepasste Gestaltung von den in Fig. 1 und 6 gezeigten Durchbrüchen 18 im Tragring 6 des Sockelteils 5, die von den Klemmfedern 15a, 15b jeweils im Montagezustand durchgriffen werden.

Fig. 5 und 6 veranschaulichen, wie die Klemmfedern 15a, 15b zwischen einerseits dem Sockelteil 5 und andererseits dem Blendrahmen 12 verklemmbar sind, wobei sie insbesondere mit ihrem einen Federschenkel 16 außenseitig am Sockelteil 5 anliegen und mit ihrem anderen Federschenkel 17 am Blendrahmen 12 und nochmals am Sockelteil 5 zur Anlage kommen.

Zunächst zeigen dabei Fig. 5 und 6, dass sich die Klemmfedern 15a, 15b bei einer Verklemmung am Sockelteil 5 mit einem freien Ende eines Federschenkels 16 an einer Umfangsfläche 19 des Sockelteils 5 abstützen. Diese Klemmstelle ist in Fig. 6 mit dem Bezugszeichen K1 bezeichnet.

Des Weiteren zeigt Fig. 6, dass die Klemmfedern 15a, 15b bei der Verklemmung am Sockelteil 5 die Durchbrüche 18 des umfangsgemäß radial abstehenden Tragrings 6 des Sockelteils 5 durchgreifen, wobei sich jeweils ein Federschenkel 17 - und zwar der unmittelbar mit der Bodenplatte 9 des Tragrahmens 8 befindliche, in der Zeichnung jeweils obere Federschenkel 17 - der Klemmfedern 15a, 15b an der durchbrochenen Wand eines Durchbruchs 18 abstützt. Diese Klemmstelle ist in Fig. 6 mit dem Bezugszeichen K2 bezeichnet.

Durch die auf beiden Seiten des Tragrahmens 8 bzw. des Sockelteils 5 erfolgende Fixierung zwischen den Klemmstellen K1 und K2, die einmal auf der Innenseite und einmal auf der Außenseite der Klemmfedern 15a, 15b liegen, ist der Tragrahmen 8 lateral - in der Zeichnung in Querrichtung - am Sockelteil 5 festgelegt. Wird jedoch eine Zugkraft auf den Tragrahmen 8 ausgeübt, die entgegen der axialen (X-X-Richtung) - in der Zeichnung vertikalen - Komponente der Klemmkraft wirkt, so kann der Tragrahmen 8 noch relativ zum Sockelteil 5 bewegt werden. Durch die oben beschriebene V-förmige Schrägstellung der Federschenkel 16, 17 ist dabei in unterschiedlicher Höhe relativ zum Sockelteil immer eine Verklemmung gewährleistet.

Fig. 6 zeigt auch, dass die Klemmfedern 15a, 15b mit ihrem Federschenkel 17, der einstückig und unmittelbar an die Bodenplatte 9 des Tragrahmens 8 angeformt ist, in unmittelbarer Nähe oberhalb der Klemmstelle K2 am Blendrahmen 12, dort insbesondere radial außen liegend, also am Rand 13 bzw. an den Auflageansätzen 14, zur Anlage kommen. Diese Klemmstelle ist in Fig. 6 mit dem Bezugszeichen K3 bezeichnet. Dadurch wird der Blendrahmen 12 in axialer und lateraler Richtung am Tragrahmen 8 fixiert, bleibt aber zusammen mit dem Tragrahmen 8 noch axial verschieblich, ohne dass dadurch eine Beeinträchtigung der Funktionssicherheit und Stabilität der Verbindung eintreten würde.

Ein Abstand zwischen dem Sockelteil 5 - insbesondere dem links in Fig. 6 dargestellten Tragring 6 des Sockelteils 5 - und dem Blendrahmen 12 - insbesondere den links in Fig. 6 dargestellten Auflageansätzen 14 des Blendrahmens 12 - ist somit dynamisch veränderbar. Dadurch können Höhentoleranzen ausgeglichen werden oder es kann ein sogenannter Putz- bzw. insbesondere Tapetenausgleich erfolgen, wenn sich zwischen dem Sockelteil 5 und dem Blendrahmen 12 eine Tapetenschicht befindet. Das mögliche Vorhandensein einer Tapetenschicht, die insbesondere eine Dicke bis zu 3,5 mm, vorzugsweise bis zu 2,0 mm, annehmen kann, ist dabei schematisch durch die in Fig. 6 mit dem Bezugszeichen T bezeichnete dunkle Stelle angedeutet.

Die Erfindung ist nicht auf die beschriebenen Ausführungsbeispiele beschränkt, sondern umfasst auch alle im Sinne der Erfindung gleichwirkenden Ausführungen, wie dies bereits aus der vorstehenden Beschreibung hervorgeht. So könnte eine erfindungsgemäße elektrische Installationsvorrichtung - im Gegensatz zu dem dargestellten Beispiel auch mit einem runden Tragrahmen 8 und/oder Blendrahmen 12 ausgeführt werden, wobei am Umfang des Tragrahmens 8 beispielsweise drei Klemmfedern 15a, 15b angeformt sind, ohne dass der Rahmen der Erfindung verlassen wird. Insbesondere der Funktionsaufsatz 1, die Platine 3 und/oder das elektrische Gerät 4 können auf die verschiedenartigste Weise ausgeführt werden, beispielsweise so, wie dies aus der DE 200 10 996 U1 und aus der DE 93 05 822 U1 an sich bekannt ist.

Weiterhin kann der Fachmann zusätzliche technische Maßnahmen vorsehen, durch die die Erfindung in zweckmäßiger Weise ausgestaltet wird. Beispielsweise ist es vorteilhaft, wenn in die einstückige Ausführung des Tragrahmens 8 mit den Klemmfedern 15a, 15b auch der Steckeransatz 11 mit einbezogen wird bzw. bei der Fertigung gegebenenfalls vorhandene weitere Einzelheiten, wie die in Fig. 4 zu sehenden Durchbrüche 20 und/oder Randkonturen 21, in den Tragrahmen 8 ein- bzw. ausgeformt werden.

### Bezugszeichen

- 1: Funktionsaufsatz
- 2: Abdeckung
- 3: Platine
- 4: elektrisches Gerät
- 5: Sockelteil
- 6: Tragring an 5
- 7: Kralle an 5
- 8: Tragrahmen für 3
- 9: Grundplatte von 8
- 10: Randsteg von 8
- 11: Steckeransatz von 8
- 12: Blendrahmen
- 13: Rand von 14
- 14: Auflageansätze an 12
- 15a, 15b: Klemmfedern an 8
- 16: erster Federschenkel von 15a, 15b, unmittelbar an 8
- 17: zweiter Federschenkel von 15a, 15b, mit freiem Ende
- 18: Durchbruch in 6
- 19: Umfangsfläche von 5
- 20: Durchbruch in 8
- 21: Randkontur von 8
- A: Abstand 15a/15a, 15b/15b
- B: Breite von 15a, 15b
- D: Dicke von 15a, 15b
- K1: erste Klemmsstelle
- K2: zweite Klemmsstelle
- K3: dritte Klemmsstelle
- T: Tapetenstelle
- X-X: Achse

## Patentansprüche

1. Elektrische Installationsvorrichtung, mit einer Platine (3), die auf einem Tragrahmen (8) befestigbar ist, welcher Klemmfedern (15a, 15b) zu seiner Verbindung mit einem Halteteil (12, 5), wie einem Blendrahmen (12) oder einem Sockelteil (5), aufweist, wobei die Klemmfedern (15a, 15b) einstückig mit dem Tragrahmen (8) ausgeführt sind,
**dadurch gekennzeichnet, dass** die Klemmfedern (15a, 15b) jeweils an drei Klemmstellen (K1, K2, K3) zwischen einerseits dem Sockelteil (5) und andererseits dem Blendrahmen (12) verklemmbar sind, wobei sich die Klemmfedern (15a, 15b) jeweils an einer ersten Klemmstelle (K1) mit einem freien Ende eines einstückig an eine Bodenplatte (9) des Tragrahmens (8) angeformten Federschenkels (16) an einer Umfangsfläche (19) des Sockelteils (5) abstützen und Durchbrüche (18) eines umfangsgemäß radial abstehenden Tragrings (6) des Sockelteils (5) durchgreifen, wobei sich an einer zweiten Klemmstelle (K2) jeweils der Federschenkel (17) der Klemmfedern (15a, 15b) an einer durchbrochenen Wand eines Durchbruchs (18) abstützt, und wobei die Klemmfedern (15a, 15b) jeweils an einer dritten Klemmstelle (K3) mit dem Federschenkel (17) oberhalb der zweiten Klemmstelle (K2) am Blendrahmen (12) radial außen liegend zur Anlage kommen, so dass der Blendrahmen (12) in axialer und lateraler Richtung am Tragrahmen (8) fixiert ist, jedoch zusammen mit dem Tragrahmen (8) axial verschieblich bleibt.

2. Installationsvorrichtung nach Anspruch 1,
**dadurch gekennzeichnet, dass** die Klemmfedern (15a, 15b) blattfederartig ausgeführt sind.

3. Installationsvorrichtung nach Anspruch 1 oder 2,
**gekennzeichnet durch** einen mit dem Tragrahmen (8) verbindbaren, den Tragrahmen (8) umgreifenden Blendrahmen (12).

4. Installationsvorrichtung nach einem der Ansprüche 1 bis 3,
**dadurch gekennzeichnet, dass** die Klemmfedern (15a, 15b) V-förmig ausgeführt sind.

5. Installationsvorrichtung nach Anspruch 4,
**dadurch gekennzeichnet, dass** die Klemmfedern (15a, 15b) jeweils zwei stumpfwinklig zueinander stehende Federschenkel (16, 17) aufweisen.

6. Installationsvorrichtung nach einem der Ansprüche 1 bis 5,
**dadurch gekennzeichnet, dass** die Klemmfedern (15a, 15b) und das Sockelteil (5) eine Codierung für den lagerichtigen Aufsatz des Tragrahmens (8) auf das Sockelteil (5) aufweisen.

7. Installationsvorrichtung nach einem der Ansprüche 1 bis 6,
**dadurch gekennzeichnet,** dassderTragrahmen (8) auf zwei einander gegenüberliegenden Seiten jeweils zwischen zwei Klemmstellen (K1, K2), die einmal auf der Innenseite und einmal auf der Außenseite der Klemmfedern (15a, 15b) liegen, lateral am Sockelteil (5) festgelegt ist, jedoch durch Ausübung einer Zugkraft auf den Tragrahmen (8), die entgegen der axialen Komponente der Klemmkraft (X-X-Richtung) wirkt, relativ zum Sockelteil (5) vertikal beweglich ist.

8. Installationsvorrichtung nach einem der Ansprüche 1 bis 7,
**dadurch gekennzeichnet, dass** der Tragrahmen (8) mittels der Klemmfedern (15a, 15b) in unterschiedlichen Höhenpositionen relativ zum Sockelteil (5) verklemmbar ist.

9. Installationsvorrichtung nach einem der Ansprüche 1 bis 8,
**dadurch gekennzeichnet, dass** ein Abstand zwischen dem Sockelteil (5) und dem Blendrahmen (12) dynamisch veränderbar ist.

10. Installationsvorrichtung nach einem der Ansprüche 1 bis 9,
**dadurch gekennzeichnet, dass** ein Abstand zwischen dem Tragring (6) des Sockelteils (5) und den Auflageansätzen (14) des Blendrahmens (12) dynamisch veränderbar ist.

11. Installationsvorrichtung nach Anspruch 10,
**dadurch gekennzeichnet, dass** sich im Abstand zwischen dem Sockelteil (5) und dem Blendrahmen (12) eine Putz- oder Tapetenschicht (T) befindet.

12. Installationsvorrichtung nach Anspruch 11,
**dadurch gekennzeichnet, dass** die Putz- oder Tapetenschicht (T) eine maximale Dicke von 3,5 mm aufweist.

13. Installationsvorrichtung nach Anspruch 11 oder 12,
**dadurch gekennzeichnet,** die Putz- oder Tapetenschicht (T) eine maximale Dicke von 2,0 mm aufweist.

14. Installationsvorrichtung nach einem der Ansprüche 1 bis 13,
**dadurch gekennzeichnet, dass** der Tragrahmen (8) als Kunststoff-Formteil oder Spritzgussteil gefertigt ist.

15. Installationsvorrichtung nach einem der Ansprüche 1 bis 14,
**dadurch gekennzeichnet, dass** der Tragrahmen (8) aus einem Polycarbonat, z. B. Polyoxymethylen, Polymethacrylsäuremethylester oder einem verstärkten Kunststoff, wie faserverstärktem Polyamid besteht.

16. Tragrahmen (8) für eine elektrische Installationsvorrichtung nach einem der Ansprüche 1 bis 8 mit den Merkmalen des kennzeichnenden Teils eines der Ansprüche 1, 2, 4 bis 8 oder 14 oder 15.

## Claims

1. Electrical installation device, having a printed circuit board (3) which can be mounted on a carrying frame (8) which has clamping springs (15a, 15b) in order to be connected to a holding part (12, 5), such as a cover frame (12) or a base part (5), wherein the clamping springs (15a, 15b) are integrally formed with the carrying frame (8),
**characterized in that** the clamping springs (15a, 15b) can each be clamped between firstly the base part (5) and secondly the cover frame (12) at three clamping points (K1, K2, K3), wherein the clamping springs (15a, 15b) are each supported on a circumferential face (19) of the base part (5) by way of a free end of a spring limb (16), which is integrally formed on a base plate (9) of the carrying frame (8), and pass through apertures (18) in a circumferentially radially projecting carrying ring (6) of the base part (5) at a first clamping point (K1), wherein in each case the spring limb (17) of the clamping springs (15a, 15b) is supported against a broken-through wall of an aperture (18) at a second clamping point (K2), and wherein the clamping springs (15a, 15b) each come to rest radially externally against the cover frame (12) by way of the spring limb (17) above the second clamping point (K2) at a third clamping point (K3), so that the cover frame (12) is fixed to the carrying frame (8) in the axial and lateral direction but can still be axially displaced together with the carrying frame (8).

2. Installation device according to Claim 1,
**characterized in that** the clamping springs (15a, 15b) are of leaf spring-like design.

3. Installation device according to Claim 1 or 2,
**characterized by** a cover frame (12) which can be connected to the carrying frame (8) and engages around the carrying frame (8).

4. Installation device according to one of Claims 1 to 3,
**characterized in that** the clamping springs (15a, 15b) are of V-shaped design.

5. Installation device according to Claim 4,
**characterized in that** the clamping springs (15a, 15b) each have two spring limbs (16, 17) which are at an obtuse angle in relation to one another.

6. Installation device according to one of Claims 1 to 5,
**characterized in that** the clamping springs (15a, 15b) and the base part (5) have a coding for mounting the carrying frame (8) on the base part (5) in the correct position.

7. Installation device according to one of Claims 1 to 6,
**characterized in that** the carrying frame (8) is secured laterally on the base part (5) on two mutually opposite sides in each case between two clamping points (K1, K2) which lie one on the inside and one on the outside of the clamping springs (15a, 15b), but can be vertically moved relative to the base part (5) by exerting a tensile force on the carrying frame (8), the said tensile force counteracting the axial component of the clamping force (X-X direction).

8. Installation device according to one of Claims 1 to 7,
**characterized in that** the carrying frame (8) can be clamped in different vertical positions relative to the base part (5) by means of the clamping springs (15a, 15b).

9. Installation device according to one of Claims 1 to 8,
**characterized in that** a spacing between the base part (5) and the cover frame (12) can be dynamically varied.

10. Installation device according to one of Claims 1 to 9,
**characterized in that** a spacing between the carrying ring (6) of the base part (5) and the support projections (14) of the cover frame (12) can be dynamically varied.

11. Installation device according to Claim 10,
**characterized in that** a plaster or wallpaper layer (T) is located in the spacing between the base part (5) and the cover frame (12).

12. Installation device according to Claim 11,
**characterized in that** the plaster or wallpaper layer (T) has a maximum thickness of 3.5 mm.

13. Installation device according to Claim 11 or 12,
**characterized in that** the plaster or wallpaper layer (T) has a maximum thickness of 2.0 mm.

14. Installation device according to one of Claims 1 to 13,
**characterized in that** the carrying frame (8) is produced as a plastic shaped part or injection-moulded part.

15. Installation device according to one of Claims 1 to 14,
**characterized in that** the carrying frame (8) consists of a polycarbonate, for example polyoxymethylene, polymethacrylic acid methyl ester or a reinforced plastic, such as fibre-reinforced polyamide.

16. Carrying frame (8) for an electrical installation device according to one of Claims 1 to 8 having the features of the characterizing part of one of Claims 1, 2, 4 to 8 or 14 or 15.

## Revendications

1. Dispositif d'installation électrique, comprenant une platine (3) qui peut être fixée sur un cadre porteur (8), lequel possède des ressorts de serrage (15a, 15b) pour sa liaison avec une partie de maintien (12, 5) comme un cadre obturateur (12) ou une partie de socle (5), les ressorts de serrage (15a, 15b) étant réalisés d'un seul tenant avec le cadre porteur (8),
**caractérisé en ce que** les ressorts de serrage (15a, 15b) peuvent respectivement être coincés au niveau de trois points de serrage (K1, K2, K3) entre la partie de socle (5) d'un côté et le cadre obturateur (12) de l'autre côté, les ressorts de serrage (15a, 15b) s'appuyant respectivement en un premier point de serrage (K1) au niveau d'une surface périphérique (19) de la partie de socle (5) avec une extrémité libre d'une branche de ressort (16) façonnée d'un seul tenant sur une plaque de fond (9) du cadre porteur (8) et pénétrant dans des traversées (18) d'une bague porteuse (6) de la partie de socle (5) qui fait saillie dans le sens radial sur la périphérie, la branche de ressort (17) des ressorts de serrage (15a, 15b) s'appuyant respectivement en un deuxième point de serrage (K2) au niveau d'une paroi transpercée d'une traversée (18), et les ressorts de serrage (15a, 15b) venant respectivement s'appuyer en un troisième point de serrage (K3) avec la branche de ressort (17) au-dessus du deuxième point de serrage (K2) sur le cadre obturateur (12) à l'extérieur dans le sens radial, de sorte que le cadre obturateur (12) soit bloqué contre le cadre porteur (8) dans le sens axial et latéral, mais reste cependant coulissant dans le sens axial avec le cadre porteur (8).

2. Dispositif d'installation selon la revendication 1, **caractérisé en ce que** les ressorts de serrage (15a, 15b) sont réalisés sous la forme de ressorts à lames.

3. Dispositif d'installation selon la revendication 1 ou 2, **caractérisé par** un cadre obturateur (12) pouvant être relié au cadre porteur (8) et enserrant le cadre porteur (8).

4. Dispositif d'installation selon l'une des revendications 1 à 3, **caractérisé en ce que** les ressorts de serrage (15a, 15b) sont réalisés en forme de V.

5. Dispositif d'installation selon la revendication 4, **caractérisé en ce que** les ressorts de serrage (15a, 15b) possèdent respectivement deux branches de ressort (16, 17) formant un angle obtus l'une par rapport à l'autre.

6. Dispositif d'installation selon l'une des revendications 1 à 5, **caractérisé en ce que** les ressorts de serrage (15a, 15b) et la partie de socle (5) possèdent un codage pour la pose en position correcte du cadre porteur (8) sur la partie de socle (5).

7. Dispositif d'installation selon l'une des revendications 1 à 6, **caractérisé en ce que** le cadre porteur (8) est immobilisé latéralement sur la partie de socle (5) sur deux côtés mutuellement opposés, respectivement entre deux points de serrage (K1, K2), qui se trouvent une fois sur le côté intérieur et une fois sur le côté extérieur des ressorts de serrage (15a, 15b), mais peut cependant être déplacé verticalement par rapport à la partie de socle (5) en exerçant une force de traction sur le cadre porteur (8), laquelle agit contre les composantes axiales de la force de serrage (direction X-X).

8. Dispositif d'installation selon l'une des revendications 1 à 7, **caractérisé en ce que** le cadre porteur (8) peut être coincé à l'aide des ressorts de serrage (15a, 15b) dans différentes positions en hauteur par rapport à la partie de socle (5).

9. Dispositif d'installation selon l'une des revendications 1 à 8, **caractérisé en ce qu'**un écart entre la partie de socle (5) et le cadre obturateur (12) peut être modifié dynamiquement.

10. Dispositif d'installation selon l'une des revendications 1 à 9, **caractérisé en ce qu'**un écart entre la bague porteuse (6) de la partie de socle (5) et les talons d'appui (14) du cadre obturateur (12) peut être modifié dynamiquement.

11. Dispositif d'installation selon la revendication 10, **caractérisé en ce qu'**une couche de crépi ou de tapisserie (T) se trouve dans l'écart entre la partie de socle (5) et le cadre obturateur (12).

12. Dispositif d'installation selon la revendication 11, **caractérisé en ce que** la couche de crépi ou de tapisserie (T) possède une épaisseur maximale de 3,5 mm.

13. Dispositif d'installation selon la revendication 11 ou 12, **caractérisé en ce que** la couche de crépi ou de tapisserie (T) possède une épaisseur maximale de 2,0 mm.

14. Dispositif d'installation selon l'une des revendications 1 à 13, **caractérisé en ce que** le cadre porteur (8) est réalisé sous la forme d'une pièce moulée en matière plastique ou d'une pièce moulée par injection.

15. Dispositif d'installation selon l'une des revendications 1 à 14, **caractérisé en ce que** le cadre porteur (8) se compose d'un polycarbonate, par exemple du polyoxyméthylène, de l'ester méthylique d'acide polyméthacrylique ou d'une matière plastique renforcée comme du polyamide renforcé par des fibres.

16. Cadre porteur (8) pour dispositif d'installation électrique selon l'une des revendications 1 à 8, ayant les caractéristiques de la partie caractérisante de l'une des revendications 1, 2, 4 à 8 ou 14 ou 15.
